# EUROPEAN PATENT SPECIFICATION

(11) **EP 0 689 483 B1**
(45) Date of publication and mention of the grant of the patent: **03.05.2000**
(21) Application number: 94910143.0
(22) Date of filing: 25.02.1994
(51) Int. Cl.: B21C 25/02

(54) **EXTRUSION OF TUBING, SHEETING AND PROFILE SHAPES**
STRANGPRESSEN VON ROHREN, PLATTEN UND PROFILEN
EXTRUSIONS EN FORMES DE TUBES, DE PLAQUES ET DE PROFILES

(30) Priority: 26.02.1993 US 23365; 09.12.1993 US 164385
(43) Date of publication of application: 03.01.1996
(73) Proprietor: Lex Industries, Inc., Rochester, New York 14618 (US)
(72) Inventor: Lessen, Martin, (US)
(74) Representative: Gowshall, Jonathan Vallance
(86) International application number: US9401830
(87) International publication number: WO9419123

(56) References cited:
- GB-A- 121 454
- US-A- 3 008 187
- US-A- 3 404 203
- US-A- 4 076 481
- DATABASE WPI Section Ch, Week 8129 Derwent Publications Ltd., London, GB; Class M21, AN 81-53146 XP002017565 & SU-A-776 692 (MOSCOW STEEL ALLOYS INST) , 21 November 1980

## Description

### Cross Reference to Related Applications

This application is a continuation-in-part application of copending U.S. Patent Application Serial No. 023,365, filed 02/26/93. inventor Lessen.

### Field of the Invention

This invention relates in general to the extrusion of material and, more particularly to new and improved method and apparatus for the extrusion of tubing, sheets, and profile shapes.

### Background of the Invention

The property of isotropy in a material implies that all physical properties, including elastic, plastic, and strength properties, are invariant with respect to the direction of observation. Anisotropy, on the other hand, implies that the various physical properties of the material are a function of the direction of observation. For example, wood is an anisotropic material in that its properties in the direction of the grain are different from those in a direction perpendicular to the grain.

When a material which is initially isotropic is extruded, it will become anisotropic unless the microstructure of the material is allowed sufficient time to relax toward isotropy before the material is quenched.

During the extrusion process, the material is generally extended in the direction of extrusion and contracted in the directions perpendicular to the direction of extrusion. In the case of extrusion of sheets, the material is extended in the directions of extrusion and of the width of the sheet, but contracted in the direction of the thickness of the sheet. If the material is a long chain polymeric substance, the extrusion process will tend to align the molecules in the direction of the extrusion. Since the long chain polymeric chemical bonds are generally stronger than cross-linking bonds between chains, the strength of the aligned polymer is greater in the direction of alignment than perpendicular to it. In the case of a polycrystalline solid, the slip systems within the crystal grains will cause the deformed grains to align themselves in the direction of extrusion with material strength implications similar to that for a long chain polymeric material, i.e., greater tensile strengths in the direction of extrusion than transverse to the direction of extrusion.

For extrusions such as pipe, conduit, drain gutters, and other cross-sectional shapes, the tensile strength transverse to the direction of extrusion may be more important than that in the direction of extrusion. For example, in a tube or pipe under internal pressure, the wall stress in an axial direction is half that of the wall stress in a tangential direction. Yet, with conventional pipe extrusion, the strength of the material in the axial direction is greater than that in the tangential direction. Thus, in conventional extrusion, the material for piping or tubing is disadvantageously oriented. In like manner, for a conventionally extruded profile shape or sheet, the bending strength in the direction transverse to the direction of extrusion is less than that in the direction of extrusion, because the transverse elongation during extrusion is less than the elongation in the direction of extrusion.

There exists a method of orienting the extruded material somewhat in the tangential direction while it is already oriented in the axial direction (termed bi-axial orientation) by enlarging the diameter (and hence the circumference) of the tubing or pipe at the end of the extrusion process. (See,e.g., P.V.C. Technology, Fourth Ed., W.V. Titov, Elsevier Applied Science Publishers, 1984, Essex England, P. 882; The Encyclopedia of Plastics Equipment, pages 425-427, ed, H.R. Simonds, Reinhold Publishing Corp., New York, 1964). However, for a significant tangential elongation, the resulting tubing is limited in thickness. Similarly, the material of a sheet extrusion can be bi-axially oriented by stretching it in the transverse direction after it is extruded.

An interesting type of material orientation on a larger scale than heretofore discussed is described in Winton L. Slade, "Method and Apparatus for Extruding Polytetraflouroethylene Tubing" U.S. Patent 3008187, Nov. 14, 1961. It was noted that in the manufacture of said tubing from a powder of the tubing material which was initially suspended in an organic extrusion aid to form a paste and then formed into an annular billet, when the billet was extruded through a tube forming die, the powder of the tubing material formed fibres which were oriented in the direction of extrusion. After extrusion the tubing was sintered and the fibrous structure and associated voids disappeared. However, the resulting tubing seemed to seep low viscosity fluids and thus Slade provided a remedy which consisted of having large helical grooves on the male and female portions of his extrusion die. Since the direction of extrusion inside the grooves was helical, the opposing helices of the male and female extrusion die members resulted in opposing helical fibre structures of the material on the inner and outer surfaces of the tubing which after sintering and resulting shrinkage, had an inhibiting effect on fissuring and resulting seepage. It is to be noted that in the Slade process, the initially powdered state has no orientation, inasmuch as the granules are of amorphous and isotropic material and may be considered as being approximately spherical in shape. The orientation of the extruded state is formed by the extrusion process and lies in the local direction of extrusion; virtually all of the granules in the grooves become aligned fibres in the direction of the grooves. For greatest effect, it is important for the maximum amount of granules to pass through the grooves and the minimum amount of granules to pass through the annulus between both sets of grooves. The recommended angle between both sets of grooves and hence fibres is from 15° to 60°, and the recommended depth of each of both sets of grooves is from two to five times the thickness of the annulus between the grooves according to Slade. It is also to be noted that in extruding a long chain polymer or a polycrystalline solid, the initial orientation of the molecular chains or crystal grains is random and that after extrusion, there is a statistical directional orientation distribution that favors the direction of extrusion, but that also leaves some chains or grains still disadvantageously oriented. For a polycrystalline solid, the strengthening effect in the direction of elongation is known as strain-hardening.

Slade also discloses the possibility of rotating the male portion of the die relative to the female portion of the die during extrusion.

Another interesting process involving large strains superposed on extrusion or drawing of rods and pipes is describes in Sinnathamby Thiruvarudchelvan "Method and Apparatus for Forming Elongated Articles Having Reduced Diameter Cross Sections" U.S. Patent 4,300,378, Nov. 17, 1981. This process consists of" a method and apparatus for forming elongated articles whereby a torque is transmitted to the deforming material as it passes through a die cavity to facilitate the reduction in cross-section as it passes therethrough." The torque twists the rod being extruded about the axis of symmetry by rotating at least one part of the die during operation. In the case of pipe extrusion, the rod is concomitantly pierced by a smooth mandrel. The stress in this case is a shearing stress on a plane perpendicular to the axis of symmetry and in a direction perpendicular to the radius from the axis. The deformation produced is similar to that in a pack of playing cards held between the palms of both hands with one palm then rotated in its plane relative to the other. This is not the effect operating in the present invention.

### SUMMARY OF INVENTION

According to the present invention, there is provided new and improved method and apparatus for extruding material such as tubing, sheets, and profile shapes. It has been found that a large shearing deformation will orient a material in much the same way as an elongation. A shearing deformation can be defined by considering two parallel planes in a medium where the planes are attached to the medium. If the medium is so deformed that one plane is displaced in a parallel direction relative to the other plane, the shearing deformation is given by the displacement gradient, or the ratio of the displacement to the perpendicular distance between the two planes. The usual deformation considered in Elasticity Theory is small compared to 1. In this present invention the deformation is of the order of 10, and may be classed as large.

According to one aspect of the present invention, there is provided a method for extruding material of a predetermined, walled cross-section comprising the steps of:
providing material to be extruded;
applying extruding forces to said extrudable material to produce extruded material having a predetermined, walled cross-section having opposite surfaces; and
applying a large shearing deformation to the greater pan of said material being extruded with material displacement in a direction (15) tangential to the surfaces of the material and generally perpendicular to the direction (9) of extrusion, said displacement having a displacement gradient in a direction perpendicular to said surfaces while said extruding forces are being applied and the cross-section of material is being reduced, wherein said applying steps are effected by first and second dies (1, 2; 10, 11; 17, 18) opposed to and spaced from one another; and
two sets of shearing grooves (5,6; 14;19,20) with opposing lands on said first and second dies, respectively, wherein the shearing deformation is applied from land-to-land through the thickness of said material, characterised in that the total extrusion flow cross-sectional area of said grooves is much smaller than the remainder of the extrusion flow cross-sectional area at any particular cross-section of said dies, so as to produce extruded material with increased strength transverse to the direction of extrusion with a minimum of unsheared material.

According to another aspect of the present invention, there is provided apparatus for extruding material of a predetermined walled cross-section having increased strength transverse to the direction of extrusion and tangential to the extruded material surface comprising.
first and second dies (1, 2; 10, 11; 17, 18) opposed to and spaced from one another; and
two sets of shearing grooves (5, 6; 14; 19, 20) with opposing lands on said first and second dies, respectively, for applying to the greater part of material being extruded by said dies, a large shearing deformation with material displacement in a direction (15) tangential to the surfaces of the material and generally perpendicular to the direction (9) of extrusion, said displacement having a displacement gradient in a direction perpendicular to said surfaces as the cross-section of the extruded material is being reduced, and wherein the shearing deformation is applied from land-to-land through the thickness of said material, characterised in that the total extrusion flow cross-sectional area of said grooves is much smaller than the remainder of the extrusion flow cross-sectional area at any particular cross-section of said dies, so as to produce extruded material with increased strength transverse to the direction of extrusion and with a minimum of unsheared material.

According to this aspect of the present invention, there is also provided apparatus for extruding tubular material having increased strength transverse to the direction of extrusion and tangential to the tubing surface, comprising:
an inner die (1; 17);
an opposing outer die (2;18) spaced from and surrounding said inner dye; and two sets of shearing grooves (5, 6; 19, 20) having opposing lands on said inner and said outer dies for applying to the greater part of material being extruded by said dies, a large shearing deformation with material displacement in a direction (15) tangential to the surfaces of the materials and generally perpendicular to the direction (9) of extrusion,
said displacement having a displacement gradient in a direction perpendicular to said surfaces, as the cross-section of the extruded material is being reduced, and wherein the shearing deformation is applied from land-to-land through the thickness of said material,
   characterised in that the total extrusion flow cross-sectional area of said groove is much smaller than the remainder of the extrusion flow cross-sectional area at any particular cross-section of said dies, so as to produce extruded tubular material with increased strength transverse to the direction of extrusion and tangential to the tubing surfaces with a minimum of unsheared material.

According to this aspect of the present invention there is further provided apparatus for extruding material of a predetermined, walled cross-section, comprising:
first and second dies (1, 2; 10, 11; 17, 18) opposed to and spaced from one another having two sets of shearing grooves (5, 6; 14; 19, 20) with lands on said dies respectively, for applying a large shearing deformation with material displacement in a direction (15) tangential to the surface of and generally perpendicular to the direction (9) of extrusion, said displacement having a displacement gradient in a direction perpendicular to said surface as it is being extruded and the cross-sectional area of the extruded material is being reduced, and wherein the shearing deformation is applied land-to-land through said material,
   characterised in that the total extrusion flow cross-sectional area of the grooves is much smaller than the remainder of the extrusional flow cross-sectional area at any particular cross-section of the dies.

According to this aspect of the present invention there is yet further provided apparatus for extruding sheet material having increased transverse strength, comprising,
an upper die (10);
a lower die (11); and
two sets of shearing grooves (14) having opposing lands on said upper die and said lower die, respectively, for applying to material being extruded through said dies, a large shearing deformation with material displacement in a direction (15) tangential to the surface of said material and generally perpendicular to the direction (9) of extrusion as the cross-sectional area of the extruded material is being reduced, said displacement having a displacement gradient in a direction perpendicular to said surfaces, and wherein the shearing deformation is applied from land-to-land through the thickness of said material,
   characterised in that the total extrusion flow cross-sectional area of said grooves is much smaller than the remainder of the extrusion flow cross-sectional area at the particular cross-section of said dies, so as to produce extruded sheet material with increased strength transverse to the direction of extrusion and with a minimum of unsheared material, such that the amount of extruded unsheared material is less than the amount of extruded, sheared material.

It is a feature of the apparatus of one embodiment of the present invention that a very large shearing deformation can be effected with a suitable static extruding die having a set of shearing grooves which extend generally in the direction of, but at an angle to, the direction of extrusion.

According to one aspect of the present invention, an extrusion die is provided for extruding tubing have an inner die (pin) with a set of shearing grooves which extend generally in the direction of, but at an angle to, the direction of extrusion and further having an outer die (brushing) spaced from said inner die and having a set of shearing grooves which extend generally in the direction of, but at an angle to, the direction of extrusion. The grooves of the outer die must extend at a different angle than the grooves of said inner die. It is most advantageous for the grooves of the outer die to lie at an opposite angle to the direction of extrusion than the grooves of the inner die. However, for ease of manufacture, one or the other set of grooves (but not both sets) may lie in the direction of extrusion (i.e., the axial direction).

It should be noted that since the large shearing deformation takes place in the annulus between the outer die and the inner die, and the material flowing in the grooves of said inner and outer dies is not sheared, it is important for the total cross-sectional areas of both sets of grooves to be minimized consistent with providing a maximum shear deformation to the material in the annulus. In this regard, the function of the grooves in this application differs from the function of the grooves in Slade as previously discussed.

Another embodiment of the present invention as applied to tubing extrusion lies in applying a large shearing deformation to the material during extrusion by rotating the pin about its axis of symmetry relative to the bushing where the pin and bushing are suitably grooved. Furthermore, if the pin is either an integral part of the extruder screw for a single screw extruder or one of the screws of a multiple screw extruder, and the bushing is secured directly to the extruder barrel or to a suitable adapter, the need for an extrusion head and spider to hold the pin is eliminated. The hollow screw that is usually water or liquid cooled can then permit water to be supplied directly to a hollow pin, which water can drain into the tubing being extruded to cool the tubing from the inside while a water bath cools the tubing from the outside and prevents relaxation of the bi-axial orientation of the material obtained in the die. Additionally, if the grooves of the pin are of opposite hand to the grooves in the bushing, the rotation of the pin relative to the bushing can not only serve to shear the material being extruded, but also to propel the material in an axial direction. If, on the other hand, it is desired to subject the material to a large hydrostatic pressure during extrusion the grooves can be designed to exert thrust on the material in a retrograde axial direction.

### BRIEF DESCRIPTION OF DRAWINGS

Fig. 1 is a partially cross-sectional, elevational view of an embodiment of the apparatus of the present invention for extruding tubing.
Fig. 2 is a cross-sectional, elevational view of another embodiment of the apparatus of the present invention for extruding sheet material.
Figs. 3-7 are cross-sectional, elevational views of groove profiles of dies useful in the present invention.
Fig. 8 is a diagrammatic view illustrating profile extrusion according to the present invention.
Fig. 9 is a partially cross-sectional, elevational view of an embodiment of the apparatus of the present invention for extruding tubing using a rotating pin-extruder screw combination and a bushing directly secured to the extruder barrel or an adapter.

### DESCRIPTION OF THE PREFERRED EMBODIMENTS

In general, the apparatus of the present invention comprises cooperating extrusion dies for extruding tubing, sheets and other cross-sectional shapes of polymeric material, such as polyvinyl chloride, and of metallic material, such as titanium. By using dies according to the present invention, the microstructure of the extruded material is arranged so that the strength of the materials transverse to the direction of extrusion is greater than that obtainable with ordinary dies.

During the extrusion process the materials undergo a large shearing deformation in a direction transverse to the direction of extrusion. The shearing deformation takes place as the cross-sectional thickness of the extruded material is being reduced, thus keeping the material in contact with the extruding surfaces of the dies and maintaining a sufficient hydrostatic pressure. The extruding surfaces contain grooves or ridges which lie at an angle to the direction of the extrusion (but at different or opposite angles on the opposing surfaces of the die) so that in passing between the die faces, the material is sheared. In addition, the lines in the material caused by a spider or other structure supporting the male portion of a tubing die (pin) within the female portion of the die (bushing) are spread over a large area by the shearing motion. Since the material tends to be weakest along the spider lines, an increase in the area of the spider line under stress also improves the strength of the tube extruded according to the present invention.

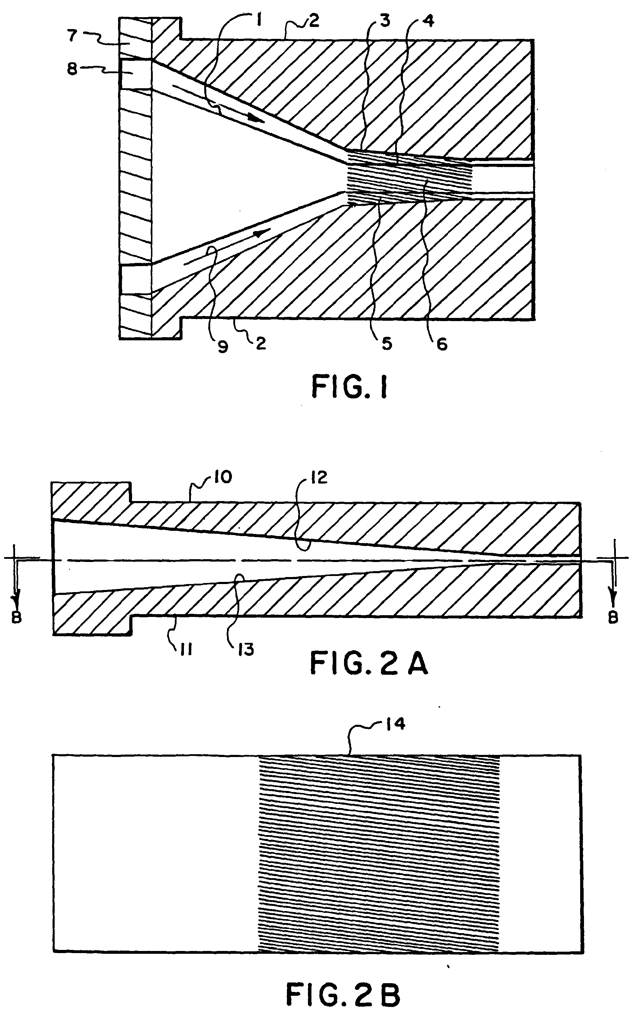

Referring now to Fig. 1, there is shown an embodiment of the present invention for extruding tubing or pipes. As shown, a tube or pipe extrusion die includes an inner die or pin 1 (not shown in cross section) and an outer die or bushing 2 (shown in cross section) which comprise the male and female components of the die, respectively. The pin 1 and bushing 2 have facing groove sections 4 and 3 which extend at least part of the length thereof. Grooved sections 4 and 3 have respective sets of helical grooves 6 and 5 of opposite sense on the extrusion forming surfaces. Grooves 6 and 5 extend in the direction of, but at an angle to the direction of extrusion. Grooves 6 and 5 serve to shear material as it progresses through the die. The helical grooves 6 and 5 make a smooth transition at both ends of the grooved sections 4 and 3 and vary in depth from the inlet (left) to the outlet (right) of the die, until the grooves disappear. Thus, smooth tubing or pipe is extruded from the die.

Pin 1 is supported by a spider 7 having spider holes 8. Extruded material, such as polymeric material or metallic material, flows in the direction of arrow 9. Metallic material would most likely be extruded from an annular billet without passing through a spider.

The pin 1 may contain a passage (not shown) for a fluid, such as water, to quench the extruded pipe as it emerges from the die. The extruded pipe may also be quenched externally after sizing, as per known processes. The temperature of the die where shearing takes place may be controlled by coolant in hollow chambers of the bushing and a hollow pin with coolant supplied through the spider or before a crosshead. Additionally, the inside of the pin may be so insulated that unwanted cooling does not occur.

In the embodiment of Fig. 1, the sets of grooves 6 and 5 may be of opposite sense or one set of grooves may extend axially in the direction of the extrusion.

Figs. 2(a) and 2(b) show another embodiment of the present invention for extruding sheet material. As shown in Fig. 2(a), a die set includes upper die half 10 and lower die half 11 having respective grooved sections 12 and 13. As shown in Fig. 2(b), grooved sections 12 and 13 have grooves 14 which extend in the direction of, but at an angle to the direction of extrusion. When assembled, the grooves are at opposite angles such that the extruded material is sheared during the extrusion process. Die halves 10 and 11 are so proportioned that the cross sectional area of the extrusion passage decreases as the material is sheared.

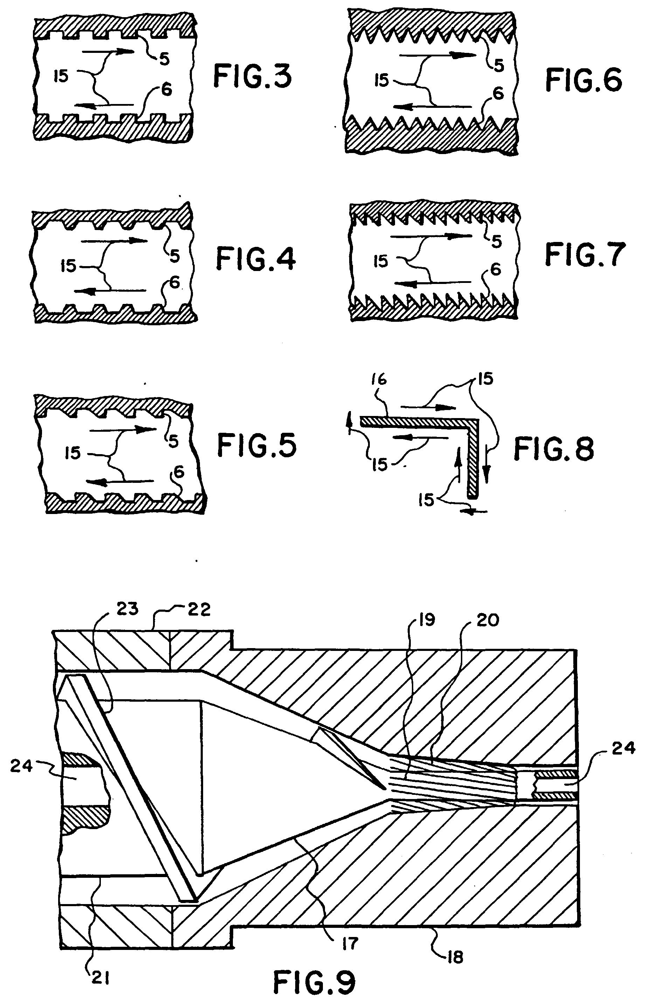

Figures 3-7 show respective preferred cross-sectional shapes for the grooves 5,6 of the embodiment of Fig. 1 or of the grooves 14 of the embodiment of Fig. 2. In each of Figs. 3-7, shearing is effected in the directions of arrows 15. In Fig. 3, the grooves 5,6 have a rectangular cross section. In Fig. 4, the grooves 5,6 have a frustrum of an isosceles triangle cross section. In Fig. 5, the grooves 5,6 have a frustrum of a right triangle cross-section. In Fig. 6, the grooves 5,6 have an isosceles triangle cross-section. In Fig. 7, the grooves 5,6 have a right triangle cross-section.

It will be understood by those skilled in the art that grooves 5,6 may have cross-sections other than those shown. It will also be understood that projections of similar cross-section to those of Figs 3-7 may be substituted for the grooves to effect shearing of extruded material.

It should be noted that the grooves or projections to accomplish large shearing deformation in the annulus must have relatively sharp edges to grip the extruded material in shear as contrasted to the "smooth curved surfaces" of the grooves as disclosed in Slade (as forementioned), which would be very poor in shearing.

Fig. 8 shows an L-shaped profile extrusion 16. Any profile may be extruded. The extruding faces of the extruding passages have sets of inclined grooves in order to effect shear of the extruded material in a manner similar to that described above with respect to the embodiments of Figs. 1 and 2. Arrows 15 show the direction of the shear.

Fig. 9 shows a pipe extrusion die as in Fig 1 but having the pin either integral with, or mounted on the extruder feed screw. The extrusion die consists of a pin 17 (shown in partial section), bushing 18 shown in section having respective sets of shearing grooves 19,20. The pin is either integral with the extruder feed screw 21 or affixed to it. The grooves not only serve to shear the material as it is being extruded but are also designed to concurrently either propel the material axially, resist the axial motion of the material, or have no effect on the axial thrust exerted on the material as the pin 17 is rotated about its axis of symmetry. The feed screw rotates inside the barrel 22 of the extruder. The extruder may be either of the single screw design (as shown) or the multiple screw design (not shown) with an appropriate adapter. The screw has threads or flights 23 and with the pin 17 is hollow 24 to permit the flow of coolant interiorly; the interior coolant passage may be partially thermally insulated (not shown). The hollow screw also permits coolant to flow out through the hollow pin to cool the pin and the interior of the extruded pipe. The flights 23 may extend on to the pin up to the shearing grooves.

### EXAMPLES

Polyvinyl chloride (PVC) material with no toughening additive was used to extrude a length of 2.54 cm (one inch) diameter conduit using an extrusion die of the configuration shown in Fig. 1. The bushing 2 had a grooved section 3 with 30 axial grooves 5 having a rectangular cross-section. The pin 1 had a cylindrical grooved section 4 with 30 grooves 6 which spiraled 120 degrees about the pin axis. The radial clearance (annular width) between the pin and the bushing decreased by about 50% from one end of the grooved sections to the other.

The groove dimensions on both the pin and bushing were 0.1578 cm (.0625) inches wide and 0.0381 cm (.015) inches deep. The width of the annulus between the pin and the bushing at its narrowest point was 0.2921 cm (.115 inches). The total cross-sectional area of both sets of grooves was 0.3625 cm² (.0562) square inches whereas the cross-sectional area of the annulus at its narrowest was 2.8961 cm² (.4489) square inches. The ratio of the groove to annulus areas in this case was .1252. The ratio of groove height to annulus width was .0767; the corresponding ratio for Slade (as forementioned) was from 2 to 5.

In a test of the 2.54 cm (one inch) PVC conduit extruded by the method and apparatus of the present invention, the conduit withstood a transverse impact load of 6.9127 kg.-m (50 ft.-lbs.) (9.0718 kg (20 lbs.) dropped from a height of 0.762 m (2.5 ft.).) In comparison conduit of identical dimension and composition but conventionally extruded, withstood only 1.3825 kg.-m (10 ft.-lbs.) (9.0718 kg (20 lbs.) dropped from 0.1524 m (0.5 ft.) height).

In order to satisfy specification, one inch diameter conduit typically must withstand an impact loading of 13.8255 kg.-m (100 ft.-lbs.) Therfore, with conventional extrusion, 5 parts of an expensive toughing additive (such as HYCAR) must be added per hundred parts of PVC in order to obtain the required strength. In another example according to the present invention, a length of conduit was extruded using the grooved die as above. The conduit was made of PVC having chlorinated polyethylene (a cheaper additive than HYCAR) added as a toughening agent (2 parts per hundred parts of PVC). The conduit withstood a shock loading of 24.8859 kg.-m (180 ft.-lbs.) (9.0718 kg (20 lbs.) dropped from a height of 2.7432 m (9 ft.)) This conduit was the strongest tubing of its type ever tested at this facility.

It is clear that tubing having shearing extrusion according to the present invention, makes possible either super-strong extrusions, conventionally strong extrusions using less material, conventionally strong extrusions using less expensive fillers or foam or smaller portions of more expensive additives, or combinations of the foregoing.

## Claims

1. A method for extruding material of a predetermined, walled cross-section comprising the steps of:
providing material to be extruded;
applying extruding forces to said extrudable material to produce extruded material having a predetermined, walled cross-section having opposite surfaces; and
applying a large shearing deformation to the greater part of said material being extruded with material displacement in a direction (15) tangential to the surfaces of the material and generally perpendicular to the direction (9) of extrusion, said displacement having a displacement gradient in a direction perpendicular to said surfaces while said extruding forces are being applied and the cross-section of material is being reduced,
wherein said applying steps are effected by first and second dies (1, 2; 10, 11; 17, 18) opposed to and spaced from one another; and
two sets of shearing grooves (5,6; 14; 19,20) with opposing lands on said first and second dies, respectively, wherein the shearing deformation is applied from land-to-land through the thickness of said material,
characterised in that the total extrusion flow cross-sectional area of said grooves is much smaller than the remainder of the extrusion flow cross-sectional area at any particular cross-section of said dies, so as to produce extruded material with increased strength transverse to the direction of extrusion with a minimum of unsheared material.

2. A method according to Claim 1, wherein said providing step includes providing polymeric material or metallic material to be extruded.

3. A method according to Claim 1, wherein said applying step includes applying extruded forces to said extrudable material to produce tubular extruded material, sheet extruded material or profile shaped material.

4. Apparatus for extruding material of a predetermined, walled cross-section having increased strength transverse to the direction of extrusion and tangential to the extruded material surface comprising:
first and second dies (1, 2; 10, 11; 17, 18) opposed to and spaced from one another; and
two sets of shearing grooves (5, 6; 14; 19, 20) with opposing lands on said first and second dies, respectively, for applying to the greater part of material being extruded by said dies, a large shearing deformation with material displacement in a direction (15) tangential to the surfaces of the material and generally perpendicular to the direction (9) of extrusion, said displacement having a displacement gradient in a direction perpendicular to said surfaces as the cross-section of the extruded material is being reduced, and wherein the shearing deformation is applied from land-to-land through the thickness of said material,
characterised in that the total extrusion flow cross-sectional area of said grooves is much smaller than the remainder of the extrusion flow cross-sectional area at any particular cross-section of said dies, so as to produce extruded material with increased strength transverse to the direction of extrusion and with a minimum of unsheared material.

5. An apparatus according to Claim 4, wherein at least one of said two sets of shearing grooves on said first and second dies respectively, extends in the direction of but at an angle to said direction of extrusion.

6. Apparatus for extruding tubular material having increased strength transverse to the direction of extrusion and tangential to the tubing surface, comprising:
an inner die (1; 17);
an opposing outer die (2; 18) spaced from and surrounding said inner die; and
two sets of shearing grooves (5, 6; 19, 20) having opposing lands on said inner and said outer dies for applying to the greater part of material being extruded by said dies, a large shearing deformation with material displacement in a direction (15) tangential to the surfaces of the materials and generally perpendicular to the direction (9) of extrusion, said displacement having a displacement gradient in a direction perpendicular to said surfaces, as the cross-section of the extruded material is being reduced, and wherein the shearing deformation is applied from land-to-land through the thickness of said material,
characterised in that the total extrusion flow cross-sectional area of said groove is much smaller than the remainder of the extrusion flow cross-sectional area at any particular cross-section of said dies, so as to produce extruded tubular material with increased strength transverse to the direction of extrusion and tangential to the tubing surfaces with a minimum of unsheared material.

7. An apparatus according to Claim 6, wherein said two sets of shearing grooves, on said inner and outer dies, respectively, extend in the direction of, but at different or opposite angles to said direction of extrusion.

8. An apparatus according to Claim 6, wherein of said two sets of shearing grooves on said inner and outer dies, respectively, one set extends in the direction of, but at an angle to the direction of extrusion, and the other set extends in the direction of said direction of extrusion.

9. Apparatus for extruding material of a predetermined, walled cross-section, comprising:
first and second dies (1, 2; 10, 11; 17, 18) opposed to and spaced from one another having two sets of shearing grooves (5, 6; 14; 19, 20) with lands on said dies respectively, for applying a large shearing deformation with material displacement in a direction (15) tangential to the surface of and generally perpendicular to the direction (9) of extrusion, said displacement having a displacement gradient in a direction perpendicular to said surface as it is being extruded and the cross-sectional area of the extruded material is being reduced, and wherein the shearing deformation is applied land-to-land through said material,
characterised in that the total extrusion flow cross-sectional area of the grooves is much smaller than the remainder of the extrusional flow cross-sectional area at any particular cross-section of the dies.

10. An apparatus according to Claim 9, wherein said shearing grooves have rectangular cross-section, frusta of isosceles triangle cross-section, triangular cross-section, isosceles triangular cross-section, or right triangular cross-section.

11. Apparatus for extruding sheet material having increased transverse strength, comprising,
an upper die (10);
a lower die (11); and
two sets of shearing grooves (14) having opposing lands on said upper die and said lower die, respectively, for applying to material being extruded through said dies, a large shearing deformation with material displacement in a direction (15) tangential to the surface of said material and generally perpendicular to the direction (9) of extrusion as the cross-sectional area of the extruded material is being reduced, said displacement having a displacement gradient in a direction perpendicular to said surfaces, and wherein the shearing deformation is applied from land-to-land through the thickness of said material,
characterised in that the total extrusion flow cross-sectional area of said grooves is much smaller than the remainder of the extrusion flow cross-sectional area at the particular cross-section of said dies, so as to produce extruded sheet material with increased strength transverse to the direction of extrusion and with a minimum of unsheared material, such that the amount of extruded unsheared material is less than the amount of extruded, sheared material.

12. An apparatus according to Claim 11, wherein said two sets of shearing grooves on said upper and lower dies, respectively, extend in the direction of, but at opposite angles to said direction of extrusion.

13. An apparatus according to Claim 6, including means (21) to rotate the inner die (17) about it axis of symmetry relative to the outer die (18) during extrusion.

14. An apparatus according to Claim 13, wherein one set of shearing grooves (19, 20) extends parallel to the direction of extrusion.

15. An apparatus according to Claim 13, wherein both sets of shearing grooves (19,20) extend at different or opposite angles to the direction of extrusion.

16. An apparatus according to Claim 6, wherein said inner die (17) is either an integral extension of, or mounted axially on, an extruder feed screw (21) so that it rotates along with said feed screw.

## Patentansprüche

1. Verfahren zum Extrudieren von Material mit einem vorbestimmten, ummantelten Querschnitt mit folgenden Schritten:
Bereitstellen eines zu extrudierenden Materials;
Aufbringen von Extrusionskräften auf das extrudierbare Material, um extrudiertes Material mit einem vorbestimmten, ummantelten Querschnitt mit gegenüberliegenden Oberflächen zu erzeugen; und
Aufbringen einer erheblichen Scherverformung auf den größeren Teil des Materials, das extrudiert wird, unter Materialverlagerung in einer Richtung (15) tangential zu den Oberflächen des Materials und im wesentlichen senkrecht zur Extrusionsrichtung (9), wobei die Verlagerung einen Verlagerungsgradienten in einer Richtung senkrecht zu den Oberflächen aufweist während die Extrusionskräfte wirken und der Querschnitt des Materials verringert wird,
wobei die genannten Aufbringungsschritte durch erste und zweite Formwerkzeuge (1, 2; 10, 11; 17, 18) ausgeführt werden, die mit gegenseitigem Abstand und einander gegenüberstehend angeordnet sind; und
zwei Sätze von Scherungsnuten (5, 6; 14; 19, 20) mit gegenüberstehenden Stegen auf dem ersten und zweiten Formwerkzeug, wobei die Scherverformung durch die Dicke des Materials hindurch von Steg zu Steg aufgebracht wird,
dadurch gekennzeichnet, daß die gesamte Extrusionsströmungs-Querschnittsfläche der genannten Nuten wesentlich kleiner ist als der übrige Teil der Extrusionsströmungs-Querschnittsfläche an irgendeinem Querschnitt der Formwerkzeuge, um extrudiertes Material mit vergrößerter Festigkeit quer zur Extrusionsrichtung mit einem Minimum an nicht scherbeanspruchtem Material zu erzeugen.

2. Verfahren nach Anspruch 1, dadurch gekennzeichnet, daß der Schritt des Bereitstellens das Bereitstellen von Polymermaterial oder metallischem Material, das zu extrudieren ist, beinhaltet.

3. Verfahren nach Anspruch 1, dadurch gekennzeichnet, daß der Aufbringungsschritt das Aufbringen von Extrusionskräften auf das extrudierbare Material beinhaltet, um rohrförmiges extrudiertes Material, plattenförmiges extrudiertes Material oder profiliertes Material zu erzeugen.

4. Vorrichtung zum Extrudieren von Material mit einem vorbestimmten, ummantelten Querschnitt, das erhöhte Festigkeit quer zur Extrusionsrichtung und tangential zur Oberfläche des extrudierten Materials aufweist, mit:
einem ersten und zweiten Formwerkzeug (1, 2; 10, 11; 17, 18), die mit Abstand und einander gegenüberliegend angeordnet sind; und
zwei Sätzen von Scherungsnuten (5, 6; 14; 19, 20) mit einander gegenüberliegenden Stegen auf dem ersten und zweiten Formwerkzeug, um auf den größeren Teil des durch die Formwerkzeuge extrudierten Materials eine erhebliche Scherungsverformung aufzubringen, mit Materialverlagerung in einer Richtung (15) tangential zu den Oberflächen des Materials und im wesentlichen senkrecht zu der Extrusionsrichtung (9), wobei die Verlagerung einen Verlagerungsgradienten in einer Richtung senkrecht zu den Oberflächen aufweist, wenn der Querschnitt des extrudierten Materials verringert wird, und wobei die Scherungsverformung durch die Dicke des Materials hindurch von Steg zu Steg aufgebracht wird,
dadurch gekennzeichnet, daß die gesamte Extrusionsströmungs-Querschnittsfläche der genannten Nuten wesentlich kleiner ist als der übrige Teil der Extrusionsströmungs-Querschnittsfläche an irgendeinem Querschnitt der Formwerkzeuge, um extrudiertes Material mit vergrößerter Festigkeit quer zur Extrusionsrichtung mit einem Minimum an nicht scherbeanspruchtem Material zu erzeugen.

5. Vorrichtung nach Anspruch 4, dadurch gekennzeichnet, daß sich zumindest einer der beiden Sätze von Scherungsnuten auf dem ersten und zweiten Formwerkzeug in der genannten Extrusionsrichtung erstreckt, aber unter einem Winkel dazu.

6. Vorrichtung zum Extrudieren rohrförmigen Materials, das eine erhöhte Festigkeit quer zu der Extrusionsrichtung und tangential zu der Rohroberfläche aufweist, mit:
einem inneren Formwerkzeug (1; 17);
einem gegenüberliegenden äußeren Formwerkzeug (2; 18), das von dem inneren Formwerkzeug beabstandet ist und dieses umgibt; und
zwei Sätzen von Scherungsnuten (5, 6; 14; 19, 20) mit einander gegenüberliegenden Stegen auf dem inneren und äußeren Formwerkzeug, um auf den größeren Teil des durch die Formwerkzeuge extrudierten Materials eine erhebliche Scherungsverformung aufzubringen, mit Materialverlagerung in einer Richtung (15) tangential zu den Oberflächen des Materials und im wesentlichen senkrecht zu der Extrusionsrichtung (9), wobei die Verlagerung einen Verlagerungsgradienten in einer Richtung senkrecht zu den Oberflächen aufweist, wenn der Querschnitt des extrudierten Materials verringert wird, und wobei die Scherungsverformung durch die Dicke des Materials hindurch von Steg zu Steg aufgebracht wird,
dadurch gekennzeichnet, daß die gesamte Extrusionsströmungs-Querschnittsfläche der genannten Nuten wesentlich kleiner ist als der übrige Teil der Extrusionsströmungs-Querschnittsfläche an irgendeinem Querschnitt der Formwerkzeuge, um extrudiertes rohrförmiges Material mit erhöhter Festigkeit quer zu der Extrusionsrichtung und tangential zu den Rohroberflächen mit einem Minimum an nicht scherbeanspruchtem Material zu erzeugen.

7. Vorrichtung nach Anspruch 6, dadurch gekennzeichnet, daß sich die beiden Sätze von Scherungsnuten auf dem inneren und äußeren Formwerkzeug in der Extrusionsrichtung erstrecken, aber unter unterschiedlichen oder entgegengesetzten Winkeln dazu.

8. Vorrichtung nach Anspruch 6, dadurch gekennzeichnet, daß zwei Sätze von Scherungsnuten jeweils auf dem inneren und äußeren Formwerkzeug vorhanden sind, wobei sich ein Satz in Extrusionsrichtung, aber unter einem Winkel dazu erstreckt, und der andere Satz in der Extrusionsrichtung erstreckt.

9. Vorrichtung zum Extrudieren von Material mit einem vorbestimmten ummantelten Querschnitt, mit:
einem ersten und zweiten Formwerkzeug (1, 2; 10, 11; 17, 18), die einander gegenüberliegend und voneinander beabstandet angeordnet sind und zwei Sätze von Scherungsnuten (5, 6; 14; 19, 20) aufweisen, wobei Stege auf den Formwerkzeugen vorgesehen sind, um eine erhebliche Scherungsverformung mit Materialverlagerung in einer Richtung (15) tangential zu der Oberfläche und im wesentlichen senkrecht zu der Richtung (9) der Extrusion aufzubringen, wobei die Verlagerung einen Verlagerungsgradienten in einer Richtung senkrecht zu der Oberfläche besitzt, während die Extrusion erfolgt und die Querschnittsfläche des extrudierten Materials verringert wird, und wobei die Scherungsverformung durch das Material hindurch von Steg zu Steg aufgebracht wird,
dadurch gekennzeichnet, daß die gesamte Extrusionsströmungs-Querschnittsfläche der Nuten wesentlich kleiner als der übrige Teil der Extrusionsströmungs-Querschnittsfläche an irgendeinem Querschnitt der Formwerkzeuge ist.

10. Vorrichtung nach Anspruch 9, dadurch gekennzeichnet, daß die Scherungsnuten rechteckigen Querschnitt, pyramidenstumpfförmigen Querschnitt auf Basis gleichschenkliger Dreiecke, dreieckigen Querschnitt; gleichschenklig dreieckigen Querschnitt oder rechtwinklig dreieckigen Querschnitt aufweisen.

11. Vorrichtung zum Extrudieren von Plattenmaterial mit vergrößerter Festigkeit in Querrichtung, mit
einem oberen Formwerkzeug (10);
einem unteren Formwerkzeug (11); und
zwei Sätzen von Scherungsnuten (14) mit gegenüberliegenden Stegen auf dem oberen bzw. unteren Formwerkzeug, zum Aufbringen, auf durch die Formwerkzeuge extrudiertes Material, einer erheblichen Scherungsverformung mit Materialverlagerung in einer Richtung (15) tangential zu der Oberfläche des Materials und im wesentlichen senkrecht zu der Extrusionsrichtung (9), wenn die Querschnittsfläche des extrudierten Materials verringert wird, wobei die Verlagerung einen Verlagerungsgradienten in einer Richtung senkrecht zu den Oberflächen aufweist, und wobei die Scherungsverformung durch die Dicke des Materials hindurch von Steg zu Steg aufgebracht wird,
dadurch gekennzeichnet, daß die gesamte Extrusionsströmungs-Querschnittsfläche der Nuten wesentlich kleiner ist als der übrige Teil der Extrusionsströmungs-Querschnittsfläche an einem bestimmten Querschnitt der Formwerkzeuge, um extrudiertes Plattenmaterial mit erhöhter Festigkeit quer zu der Extrusionsrichtung und mit einem Minimum an nicht scherbeanspruchtem Material zu erzeugen, so daß die Menge des nicht scherbeanspruchten extrudierten Materials geringer ist als die Menge von extrudiertem. scherbeanspruchtem Material.

12. Vorrichtung nach Anspruch 11, dadurch gekennzeichnet, daß sich zwei Sätze von Scherungsnuten auf dem oberen und unteren Formwerkzeug in der Extrusionsrichtung, aber unter entgegengesetzten Winkeln erstrecken.

13. Vorrichtung nach Anspruch 6, gekennzeichnet durch eine Einrichtung (21) zum Drehen des inneren Formwerkzeugs (17) um dessen Symmetrieachse relativ zu dem äußeren Formwerkzeug (18) während der Extrusion.

14. Vorrichtung nach Anspruch 13, dadurch gekennzeichnet, daß sich ein Satz von Scherungsnuten (19, 20) parallel zu der Extrusionsrichtung erstreckt.

15. Vorrichtung nach Anspruch 13, dadurch gekennzeichnet, daß sich beide Sätze von Scherungsnuten (19, 20) unter unterschiedlichen oder entgegengesetzten Winkeln zu der Extrusionsrichtung erstrecken.

16. Vorrichtung nach Anspruch 6, dadurch gekennzeichnet, daß das innere Formwerkzeug (17) entweder eine einstückige Erweiterung einer Extruderzuführungsschnecke (21) oder axial darauf angebracht ist, so daß es zusammen mit der Zuführungsschnecke rotiert.

## Revendications

1. Procédé d'extrusion d'un produit de section transversale de forme prédéterminée, comprenant les étapes dans lesquelles :
on s'approvisionne on matière à extruder ;
on applique des forces d'extrusion à ladite matière pouvant être extrudée pour obtenir un matériel extrudé ayant une section transversale de forme prédéterminée comportant des surfaces opposées ; et
on applique une déformation de cisaillement importante à la majeure partie dudit matériel que l'on extrude par déplacement de matière dans une direction (15) tangentielle aux surfaces du produit et globalement perpendiculaire à la direction (9) d'extrusion, ledit déplacement ayant un gradient de déplacement dans une direction perpendiculaire auxdites surfaces tandis que lesdites forces d'extrusion sont appliquées et que la section transversale du matériel diminue,
dans lequel lesdites étapes d'application sont assurées par des première et seconde matrices (1, 2 ; 10, 11 ; 17, 18) opposées et espacées l'une de l'autre ; et
deux ensembles de rainures de cisaillement (5, 6 ; 14 ; 19, 20) à crêtes opposées, situés respectivement sur lesdites première et seconde matrices, dans lesquels la déformation do cisaillement est appliquée d'une crête à l'autre par l'intermédiaire de l'épaisseur dudit matériel,
caractérisé on ce que la superficie totale de section transversale de passage d'extrusion desdites rainures est bien plus petite que le reste de le superficie de section transversale de passage d'extrusion d'une quelconque section transversale particulière desdites matrices, de façon à produire un matériel extrudé à résistance augmentée transversalement à la direction d'extrusion avec un minimum de matière non cisaillée.

2. Procédé selon la revendication 1, dans lequel ladite étape d'approvisionnement comprend l'approvisionnement en matière polymère ou en matière métallique à extruder.

3. Procédé selon la revendication 1, dans lequel ladite étape d'application comprend l'application de forces d'extrusion à ladite matière pouvant être extrudée pour produire un matériel extrudé tubulaire, un produit extrudé on feuille, ou un produit extrudé en forme de profilé.

4. Appareil d'extrusion d'une matière de section transversale de forme prédéterminée, ayant une résistance augmentée transversalement à la direction d'extrusion et tangentiellement à la surface du matériel extrudé, comprenant :
des première et seconde matrices (1, 2 ; 10, 11 ; 17, 18) opposées et espacées l'une de l'autre ; et
deux ensembles de rainures de cisaillement (5, 6 ; 14 ; 19, 20) à crêtes opposées, situés respectivement sur lesdites première et seconde matrices, pour application à la majeure partie de matière que l'on extrude à l'aide desdites matrices, une déformation de cisaillement importante par déplacement de matière dans une direction (15) tangentielle aux surfaces de la matière et globalement perpendiculaire à la direction (9) d'extrusion, ledit déplacement ayant un gradient de déplacement dans une direction perpendiculaire auxdites surfaces lorsque la section transversale du matériel extrudé diminue, et dans lequel la déformation de cisaillement est appliquée d'une crête à l'autre par l'intermédiaire de l'épaisseur de ladite matière,
caractérisé en ce que la superficie totale de la section transversale du passage d'extrusion desdites rainures est bien plus petite que le reste de la superficie de la section transversale du passage d'extrusion d'une quelconque section transversale particulière desdites matrices, de façon à produire un matériel extrudé à résistance augmentée transversalement à la direction d'extrusion et avec un minimum de matière non cisaillée.

5. Appareil selon la revendication 4, dans lequel au moins l'un desdits deux ensembles de rainures de cisaillement, situés respectivement sur lesdites première et seconde matrices, s'étend dans la direction de la direction d'extrusion, mais selon un certain angle par rapport à celle-ci.

6. Appareil d'extrusion d'une matière tubulaire ayant une résistance augmentée transversalement à la direction d'extrusion et tangentiellement à la surface de tube, comprenant :
une matrice intérieure (1 ; 17) ;
une matrice extérieure opposée (2 ; 18), espacée de ladite matrice intérieure et l'entourant ; et
deux ensembles de rainures de cisaillement (5, 6 ; 19, 20) ayant des crêtes opposées, situés sur lesdites matrices intérieure et extérieure, pour appliquer à la majeure partie de matière que l'on extrude à l'aide desdites matrices, une déformation de cisaillement importante par déplacement de matière dans une direction (15) tangentielle aux surfaces du produit et globalement perpendiculaire à la direction (9) d'extrusion, ledit déplacement ayant un gradient de déplacement dans une direction perpendiculaire auxdites surfaces, lorsque la section transversale du matériel extrudé diminue, et dans lequel la déformation de cisaillement est appliquée d'une crête à l'autre par l'intermédiaire de l'épaisseur de ladite matière,
caractérisé an ce que la superficie totale de le section transversale du passage d'extrusion de ladite rainure est bien plus petite que le reste de la superficie de la section transversale du passage d'extrusion d'une quelconque section transversale particulière desdites matrices, de façon à produire un matériel tubulaire extrudé à résistance augmentée transversalement à la direction d'extrusion et tangentiellement aux surfaces de tube, avec un minimum de matière non cisaillée.

7. Appareil selon la revendication 6, dans lequel lesdits deux ensembles de rainures de cisaillement, situés respectivement sur lesdites matrices intérieure et extérieure, s'étendent dans la direction de ladite direction d'extrusion mais selon des angles différents, ou opposés, par rapport à celle-ci.

8. Appareil selon la revendication 6, dans lequel, parmi lesdits deux ensembles de rainures de cisaillement, situés respectivement sur lesdites matrices intérieure et extérieure, un ensemble s'étend dans la direction de la direction d'extrusion mais à un certain angle par rapport à celle-ci, et l'autre ensemble s'étend dans la direction de ladite direction d'extrusion.

9. Appareil d'extrusion d'une matière de section transversale de forme prédéterminée, comprenant :
des première et seconde matrices (1, 2 ; 10, 11 ; 17, 18) opposées et espacées l'une de l'autre, comportant deux ensembles de rainures de cisaillement (5, 6 ; 14 ; 19, 20) à crêtes, situés respectivement sur lesdites matrices, pour appliquer une déformation de cisaillement importante par déplacement de matière dans une direction (15) tangentielle à la surface et globalement perpendiculaire à le direction (9) d'extrusion, ledit déplacement ayant un gradient de déplacement dans une direction perpendiculaire à ladite surface lorsqu'elle est extrudée et lorsque la superficie de la section transversale du produit extrudé diminue, et dans lequel la déformation de cisaillement est appliquée d'une crête à l'autre à ladite matière,
caractérisé on ce que la superficie totale de la section transversale du passage d'extrusion des rainures est bien plus petite que le reste de la superficie de la section transversale du passage d'extrusion d'une quelconque section transversale particulière des matrices.

10. Appareil selon la revendication 9, dans lequel lesdites rainures de cisaillement ont une section transversale rectangulaire, une section transversale de cône de triangle isocèle, une section transversale triangulaire, une section transversale de triangle isocèle, ou une section transversale de triangle rectangle.

11. Appareil d'extrusion d'un matériel en feuille ayant une résistance transversale augmentée, comprenant :
une matrice supérieure (10) ;
une matrice inférieure (11) ; et
deux ensembles de rainures de cisaillement (14) ayant des crêtes opposées, situés respectivement sur lesdites matrices supérieure et inférieure, pour appliquer à la matière que l'on extrude à l'aide desdites matrices, une déformation de cisaillement importante par déplacement de matière dans une direction (15) tangentielle à la surface dudit produit et globalement perpendiculaire à la direction (9) d'extrusion lorsque la superficie de la section transversale du produit extrudé diminue, ledit déplacement ayant un gradient de déplacement dans une direction perpendiculaire auxdites surfaces, et dans lequel la déformation de cisaillement est appliquée d'une crête à l'autre à l'épaisseur de ladite matière,
caractérisé en ce que la superficie totale de la section transversale du passage d'extrusion desdites rainures est bien plus petite que le reste de la superficie de la section transversale du passage d'extrusion de la section transversale particulière desdites matrices, de façon à produire un matériel extrudé an feuille à résistance augmentée transversalement à la direction d'extrusion et avec un minimum de matière non cisaillée, de sorte que la quantité de matière extrudée non cisaillée soit inférieure à la quantité de matière extrudée cisaillée.

12. Appareil selon la revendication 11, dans lequel lesdits deux ensembles de rainures de cisaillement, situés respectivement sur lesdites matrices supérieure et inférieure, s'étendent dans la direction de ladite direction d'extrusion mais selon des angles opposés par rapport à celle-ci.

13. Appareil selon la revendication 6, comprenant un moyen (21) servant, pendant l'extrusion, à tourner la matrice intérieure (17) autour de son axe de symétrie par rapport à la matrice extérieure (18).

14. Appareil selon la revendication 13, dans lequel un ensemble de rainures de cisaillement (19, 20) s'étend parallèlement à la direction d'extrusion.

15. Appareil selon la revendication 13, dans lequel les deux ensembles de rainures de cisaillement (19, 20) s'étendent selon des angles différents ou opposés, par rapport à la direction d'extrusion.

16. Appareil selon la revendication 6, dans lequel ladite matrice intérieure (17) soit est un prolongement d'une seule pièce d'une vis d'avance (21) d'extrudeuse, soit est montée axialement sur celle-ci, de sorte qu'elle tourne conjointement avec ladite vis d'avance.
